# EUROPEAN PATENT SPECIFICATION

(11) **EP 4 095 001 B1**
(45) Date of publication and mention of the grant of the patent: **21.02.2024**
(21) Application number: 22173076.5
(22) Date of filing: 12.05.2022
(51) Int. Cl.: B60R 25/09

(54) **WHEEL BLOCKADE OF A VEHICLE, ESPECIALLY A SINGLE-TRACK VEHICLE**
RADBLOCKADE EINES FAHRZEUGS, INSBESONDERE EINES EINSPURIGEN FAHRZEUGS
BLOCAGE DES ROUES D'UN VÉHICULE, EN PARTICULIER D'UN VÉHICULE À VOIE UNIQUE

(30) Priority: 13.05.2021 PL 43785021
(43) Date of publication of application: 30.11.2022
(73) Proprietor: PKB Sp. z o. o. Sp. k., 00-410 Warszawa (PL)
(72) Inventor: Goleniak, Slawomir, 02-804 Warszawa (PL)
(74) Representative: Belz, Anna

(56) References cited:
- FR-A1- 2 694 260
- FR-A1- 2 843 362
- GB-A- 2 325 658
- GB-A- 2 471 468
- GB-A- 2 557 330
- US-A- 6 125 672
- US-A1- 2021 024 042
- US-B2- 6 935 145

## Description

The utility model relates to a wheel lock of a vehicle, especially of a single-track vehicle.

### Previous art

From application FR2694260 there is known an anti-theft vehicle wheel lock having a box onto which a wheel of the vehicle is placed, a retractable stirrup and locking spindle near the stirrup.

From document US3881680 there is known a bicycle wheel lock having a U-profiled base member, a single eyelet in the form of a loop-shaped bar, and a chain fixed to the base member which functions as a fastening member locking the vehicle to the base member using the lug.

The purpose of the utility model is to develop a vehicle wheel-lock structure that can be fixed to a mounting surface, to a wall, or used in a portable manner, having a compact design. Thanks to its compact and portable design the lock is easy for transportation and storage.

The vehicle wheel lock according to the utility model having a channel-section casing, a lug, and a locking member, characterised in that side walls of the casing at their ends at one side of the lock are equipped with coaxial openings, whereas on their outer side are equipped with pegs onto which two lugs are suspended, having at one end coaxial openings in which the pegs are fitted, whereby at the ends of the pegs there are heads having a diameter larger than that of the corresponding openings in the lugs, whereas at the other end of the lug there are other coaxial openings into which a pin is retractably fitted, which on its one end has a head with a diameter larger than that of the corresponding lug opening, while on the other end has a port for a bolt locking the pin, whereby the lugs are mounted on the pegs rotationally.

Favourably, the contour of the side walls of the casing is slanted at their ends.

Favourably, shorter edges of the lugs are arched-shaped.

Favourably, a padlock acts as a lock for the pin.

Favourably, the coaxial openings, into which the pin is fitted, are circular.

Favourably, the coaxial openings, into which the pegs are fitted, are oval.

Favourably, in the base member there are openings for fitting it into a mounting surface or to a wall.

Favourably, the pegs have a thread at their end and nuts act as their heads.

### The advantages

The vehicle wheel-lock according to the invention has a compact design being thus easily mounted to a surface, a wall, or used portably. The foldable lugs used in the solution allow to achieve a compact design while maintaining high quality protection. The lock according to the invention might be mounted onto a surface and with the lugs folded, does not protrude much above the surface. Thanks to the foldable lugs the lock used in the portable mode has a compact design and can be stored and transported in an easy manner.

Moveable elements such as the lugs with the openings allow to assemble them to the horizontal position which gives the lock a compact character making its transportation easy.

### Description of the drawings

Fig. 1 shows the isometric view of the lock in its first variant in the unfolded position.
Fig. 2 shows the isometric view of the lock in its first variant in the folded position.
Fig. 3 shows the isometric view of the locking pin.
Fig. 4. shows the isometric view of the lock in its second variant in the unfolded position.
Fig. 5 shows the isometric view of the lock in its second variant in the folded position.

### Example No. 1

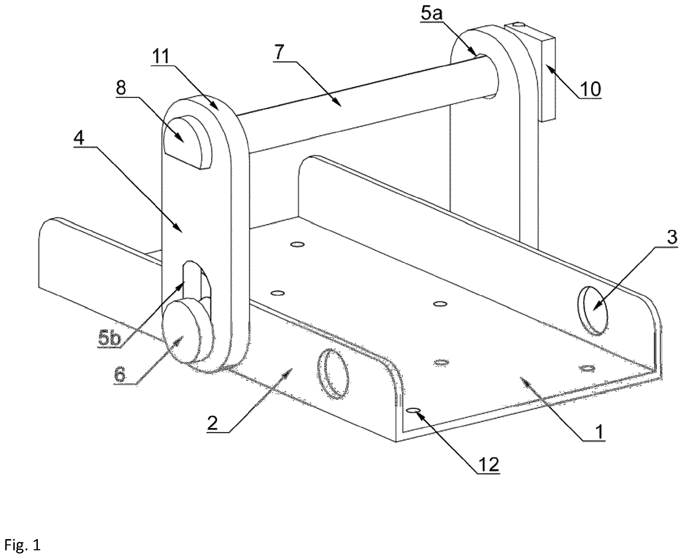

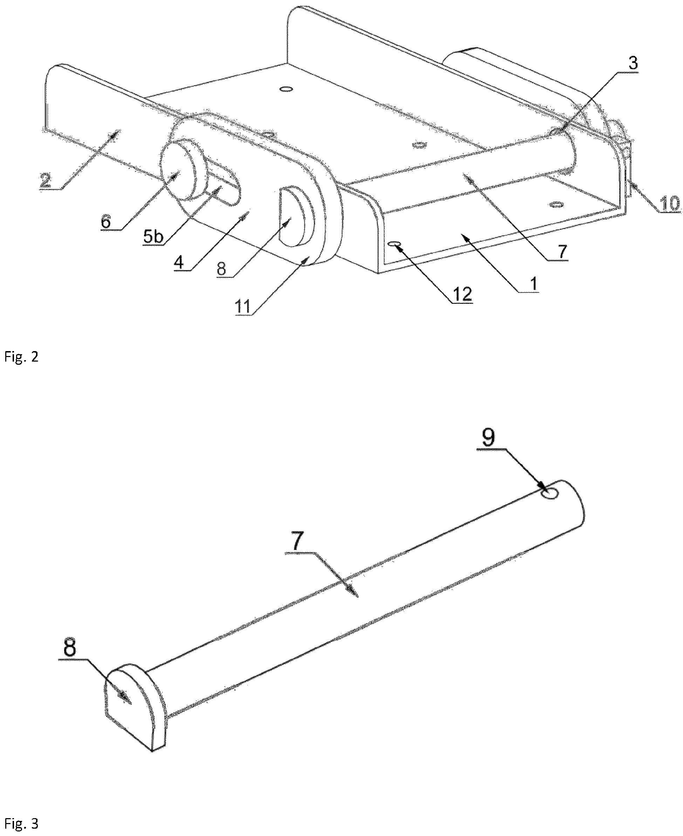

A motorbike wheel lock is shown in an indicative embodiment on Fig. 1 and Fig. 2 which present it in the perspective view. The lock has a channel-section casing 1, having side walls 2 equipped on their one side with circular openings 3, in which the vehicle wheel is placed. On the outside of the side walls 2 there are inseparable pegs 6. The lock is equipped with two lugs 4 having on their one end circular openings 5a, while on the opposite end oval openings 5b. The lugs 4 are rotationally mounted to the side walls 2 on their outer sides by the pegs 6 passing through the oval openings 5b of the lugs 4, whose heads have a bigger diameter than that of the openings 5b. There is a pin 7, mounted into the openings 5a, having on its one end a head 8 whose diameter is larger than that of the circular openings 5a of the lugs 4, while on the other side it has a pass-through opening 9 into which a bolt lock 10 in the form of a padlock is fitted.

### Example No. 2

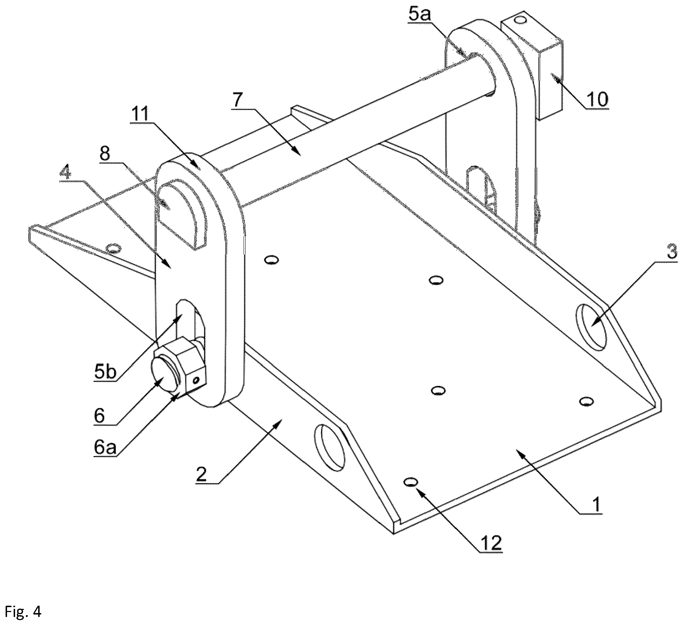

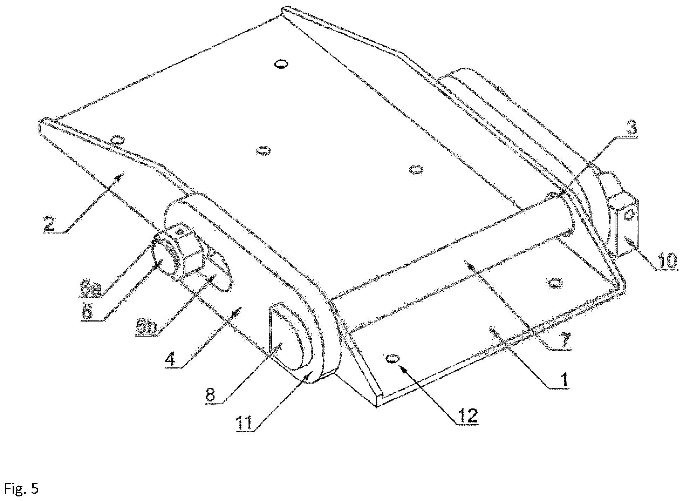

A motorcycle wheel-lock showed in its favourable variant on Fig. 4 and Fig. 5 in the perspective view. The lock in its favourable variant has a channel-section casing 1 with side walls 2 that are cut at an angle at their ends. Moreover, pegs 6, by which lugs 4 are rotationally mounted onto the side walls 2, have a thread, and on their ends there are nuts 6a screwed on, which act as their heads having a diameter larger than that of openings 5b.

The motorcycle wheel-lock has two positions, the folded one whereby a pin 7 is passed through openings 3 in the side walls 2 thus allowing for easy transportation and storage of the wheel lock, and the unfolded position (when the lock is in use) whereby the pin 7 is placed between spokes of the motorcycle wheel thus blocking rotational movement of the wheel.

## Claims

1. A vehicle wheel lock, especially for a single-track vehicle, having a channel-section casing, a lug, and a locking member, **characterised in that** side walls (2) of the casing (1) at the ends on one side of the lock are equipped with coaxial openings (3), while on the outer side are equipped with pegs (6) on which there are two lugs (4) suspended, having on their one end coaxial openings (5b) into which are fitted the pegs (6) having a head with a diameter larger than that of the openings (5b), and having on the other end coaxial openings (5a) into which a pin (7) is retractably fitted, which on its one end has a head (8) with a diameter larger than that of the openings (5a) of the lugs (4), while on the other end a pass-through opening (9) for a bolt lock (10) of the pin (7), whereby the lugs (4) are suspended on the pegs (6) rotationally.

2. The lock according to claim 1, **characterised in that** the contour of the side walls (2) of the casing (1) is slanted at their ends.

3. The lock according to claim 1, **characterised in that** shorter edges (11) of the lugs (4) are arched-shaped.

4. The lock according to claim 1, **characterised in that** a padlock acts as the bolt lock (10) of the pin (7).

5. The lock according to claim 1, **characterised in that** the coaxial openings (5a), into which the pin (7) is fitted, are circular.

6. The lock according to claim 1, **characterised in that** the coaxial openings (5b), into which the pegs (6) are fitted, are oval.

7. The lock according to claim 1, **characterised in that** in the base of the casing (1) there are openings (12) for fitting into a mounting surface.

8. The lock according to claim 1, **characterised in that** the pegs (6) on their end have a thread, whereby a nut acts as a head (6a).

## Patentansprüche

1. Radblockierung für ein Fahrzeug, insbesondere für ein einspuriges Fahrzeug, mit einem Körper mit U-Profil aufweisendem Querschnitt, einer Öse und einem Kupplungselement , **dadurch gekennzeichnet, dass** die Seitenwände (2) des Körpers (1) an ihren Enden auf einer Seite der Radblockierung koaxiale Löcher (3) aufweisen und auf der Außenseite mit Stiften (6) versehen sind, an denen zwei Ösen (4) aufgehängt sind, die an einem Ende koaxiale Löcher (5b) aufweisen, in denen sich die Stifte (6) mit einem Kopf befinden, dessen Durchmesser größer ist als der Durchmesser der Löcher (5b), während am anderen Ende koaxiale Löcher (5a) vorhanden sind, in denen ein Stift (7) gleitend befestigt ist, der an einem Ende einen Kopf (8) aufweist, dessen Durchmesser größer ist als der Durchmesser der Löcher (5a) der Ösen (4), während am anderen Ende ein durchgehendes Loch (9) für Verriegelung (10) des Stifts (7) vorhanden ist, wobei die Ösen (4) drehbar an den Stiften (6) aufgehängt sind.

2. Blockierung nach Anspruch 1, **dadurch gekennzeichnet, dass** die Seitenwände (2) des Körpers (1) an den Enden schräg geformt sind.

3. Blockierung nach Anspruch 1, **dadurch gekennzeichnet, dass** die kürzeren Seiten (11) der Ösen (4) eine gewölbte Form aufweisen.

4. Blockierung nach Anspruch 1, **dadurch gekennzeichnet, dass** die Verriegelung (10) des Stiftes (7) ein Vorhängeschloss ist.

5. Blockierung nach Anspruch 1, **dadurch gekennzeichnet, dass** die koaxialen Löcher (5a), in denen der Stift (7) befestigt ist, kreisförmig sind.

6. Blockierung nach Anspruch 1, **dadurch gekennzeichnet, dass** die koaxialen Löcher (5b), in denen sich die Stifte (6) befinden, oval sind.

7. Radblockierung für ein Fahrzeug nach Anspruch 1, **dadurch gekennzeichnet, dass** am Boden des Körpers (1)Löcher (12) zur Befestigung am Untergrund aufweist.

8. Radblockierung für ein Fahrzeug nach Anspruch 1, **dadurch gekennzeichnet, dass** die Stifte (6) am Ende ein Gewinde aufweisen und der Kopf (6a) eine Mutter ist.

## Revendications

1. Blocage de roue pour un véhicule, en particulier pour un véhicule à voie unique, comportant un corps en forme de profilé en U, un œillet et un élément de couplage, **caractérisé en ce que** les extrémités des parois latérales (2) du corps (1) sont pourvues des orifices coaxiaux (3) situés d'un côté du dispositif, et que ces parois sont pourvues du côté extérieur des goupilles (6), auxquelles sont suspendus deux oeillets (4) dont une extrémité comporte des orifices coaxiaux (5b) dans lesquels se trouvent les goupilles (6) dont les têtes ont un diamètre supérieur à celui des orifices (5b), tandis qu'à l'autre extrémité se trouvent des orifices coaxiaux (5a) dans lesquels se trouve une broche (7) fixée de manière coulissante, ayant à une extrémité une tête (8) dont le diamètre est supérieur au diamètre des trous (5a) des œillets (4), tandis qu'à l'autre extrémité se trouve un orifice traversant (9) permettant le blocage (10) de la broche (7), les oeillets (4) étant suspendues de manière pivotante aux goupilles (6).

2. Blocage selon la revendication 1, **caractérisé en ce que** les parois latérales (2) du corps (1) sont biseautées à leurs extrémités.

3. Blocage selon la revendication 1, **caractérisé en ce que** les côtés les plus courts (11) des œillets (4) ont une forme arquée.

4. Blocage selon la revendication 1, **caractérisé en ce que** le blocage (10) de la broche (7) est un cadenas.

5. Blocage selon la revendication 1, **caractérisé en ce que** les orifices coaxiaux (5a) dans lesquels est fixée la broche (7) sont de forme circulaire.

6. Blocage selon la revendication 1, **caractérisé en ce que** les orifices coaxiaux (5b) dans lesquels se trouvent les goupilles (6) sont de forme ovale.

7. Blocage de roue pour un véhicule, selon la revendication 1 **caractérisé en ce que** la base du corps (1) est pourvue d'orifices (12) pour la fixation au sol.

8. Blocage de roue pour un véhicule, selon la revendication 1 **caractérisé en ce que** les goupilles (6) ont un filetage à leurs extrémités et que la tête (6a) est un écrou.
